# EUROPEAN PATENT APPLICATION

(11) **EP 4 332 161 A1**
(43) Date of publication of application: **06.03.2024**
(21) Application number: 22795655.4
(22) Date of filing: 21.04.2022
(51) Int. Cl.: C08K 5/13, C08K 5/524, C08L 79/00, C08G 18/02

(54) **CARBODIIMIDE COMPOSITION**

(30) Priority: 28.04.2021 JP 2021076025
(71) Applicant: Nisshinbo Chemical Inc., Tokyo 103-8650 (JP)
(72) Inventor: TSUKAMOTO, Nami, Chiba-city, Chiba 267-0056 (JP); NISHIKAWA, Naoki, Chiba-city, Chiba 267-0056 (JP)
(74) Representative: Mewburn Ellis LLP
(86) International application number: PCT/JP2022/018354
(87) International publication number: WO 2022/230742

(57) **Abstract**

This carbodiimide composition is characterized by comprising a carbodiimide compound (A), a phosphite-based antioxidant (B), and a hindered phenol-based antioxidant (C), and is characterized in that the phosphite-based antioxidant (B) is contained in an amount of 1.5-5 parts by mass with respect to 100 parts by mass of the carbodiimide compound (A), and the hindered phenol-based antioxidant (C) is contained in an amount of 1.5-6 parts by mass with respect to 100 parts by mass of the carbodiimide compound (A). The carbodiimide composition can suppress foaming in a resin during molding, and provides a resin molded article having excellent hydrolysis resistance.

## Description

### TECHNICAL FIELD

The present invention relates to a carbodiimide composition.

### BACKGROUND ART

Carbodiimide compounds have a carbodiimide group represented by [-N=C=N-] in the molecule, and have characteristics such as that they react with active hydrogen compounds (such as carboxylic acids, amines, alcohols, and thiols), have a satisfactory adhesive property, have excellent heat resistance, and are being capable of taking various forms (such as varnishes, powders, and films). The carbodiimide compounds are used in various applications such as a crosslinking agent, an adhesive agent, a resin modifier, a heat insulating material, a sound absorbing material, and a gasket.

Conventionally, many resin compositions containing a polycarbodiimide compound and a thermoplastic resin have been known, and in any of them, improvement in durability of the thermoplastic resin and improvement in mechanical properties have been achieved.

For example, Patent Document 1 discloses a polyester resin composition obtained by compounding a carbodiimide compound, an epoxy compound, and a reinforcing filler each in a predetermined amount in a thermoplastic polyester.

Patent Document 2 discloses a carbodiimide composition containing a carbodiimide compound and an antioxidant dispersed therein, and a resin composition containing an aliphatic polyester resin and other components.

Patent Document 3 discloses a polybutylene terephthalate resin composition containing a polybutylene terephthalate resin, a carbodiimide compound, an alkali compound, a hindered phenol antioxidant, a thioether antioxidant, and a phosphorus compound at a predetermined ratio.

Unfortunately, the technique of Patent Document 1 has a problem that an isocyanate group contained in a small amount in the carbodiimide reacts with a residual carbodiimidization catalyst so that the resin composition may foam during molding, and as a result, the molded article may contain air bubbles.

In this respect, it cannot be said that even the compositions of Patent Documents 2 and 3 containing an antioxidant sufficiently control foaming during molding or impart sufficient hydrolysis resistance to resin molded articles obtained from the compositions, and there is room for improvement in these respects.

### PRIOR ART DOCUMENTS

### PATENT DOCUMENTS

Patent Document 1: JP-A S56-161452
Patent Document 2: JP-A 2005-053870
Patent Document 3: WO 2017/038864

### SUMMARY OF INVENTION

### TECHNICAL PROBLEM

The present invention has been made in view of such circumstances, and an object of the present invention is to provide a carbodiimide composition that is capable of controlling foaming in a resin during molding, and that provides a resin molded article having satisfactory hydrolysis resistance.

### SOLUTION TO PROBLEM

As a result of intensive studies to achieve the above-mentioned object, the present inventors have found that a composition containing a carbodiimide compound and two specific antioxidants each in a predetermined amount, when added to a resin, is capable of controlling foaming in the resin during molding, and provides a resin molded article having satisfactory hydrolysis resistance, thereby completing the present invention.

That is, the present invention provides the following items.
1. A carbodiimide composition containing:
   a carbodiimide compound (A);
   a phosphite antioxidant (B); and
   a hindered phenol antioxidant (C),
   the carbodiimide composition containing 1.5 parts by weight or more and 5 parts by weight or less of the phosphite antioxidant (B) per 100 parts by weight of the carbodiimide compound (A), and 1.5 parts by weight or more and 6 parts by weight or less of the hindered phenol antioxidant (C) per 100 parts by weight of the carbodiimide compound (A).
2. The carbodiimide composition according to item 1, wherein a weight ratio of the phosphite antioxidant (B) to the hindered phenol antioxidant (C) is phosphite antioxidant (B) : hindered phenol antioxidant (C) = 1 : 1 or more.
3. The carbodiimide composition according to item 2, wherein the weight ratio of the phosphite antioxidant (B) to the hindered phenol antioxidant (C) is phosphite antioxidant (B) : hindered phenol antioxidant (C) = 1 : 1 to 1 : 2.
4. The carbodiimide composition according to any one of items 1 to 3, wherein the carbodiimide compound (A) is obtained using at least one compound selected from the group consisting of dicyclohexylmethane diisocyanate, diphenylmethane diisocyanate, tetramethylxylylene diisocyanate, xylylene diisocyanate, isophorone diisocyanate, hexamethylene diisocyanate, and tolylene diisocyanate.
5. The carbodiimide composition according to any one of items 1 to 4, wherein the phosphite antioxidant (B) is a compound having a pentaerythritol structure.
6. The carbodiimide composition according to item 1 or 2, wherein the hindered phenol antioxidant (C) is a compound having a pentaerythritol structure.
7. A resin composition containing:
   the carbodiimide composition according to any one of items 1 to 6; and
   a resin.
8. The resin composition according to item 7, wherein the resin is a polyester resin.
9. A method for producing a resin composition, the method including the steps of
   compounding 100 parts by weight of a carbodiimide compound (A), 1.5 parts by weight or more and 5 parts by weight or less of a phosphite antioxidant (B), and 1.5 parts by weight or more and 6 parts by weight or less of a hindered phenol antioxidant (C) to prepare a carbodiimide composition; and
   mixing the obtained carbodiimide composition with a resin.
10. A molded article of the resin composition according to item 7 or 8.
11. A cured product of the resin composition according to item 7.
12. The molded article according to item 10, which is a film or a sheet.
13. A foam control agent for resin molding containing the carbodiimide composition according to any one of items 1 to 6.
14. A method for controlling foaming during resin molding, the method including compounding the carbodiimide composition according to any one of items 1 to 6 in a resin.

### ADVANTAGEOUS EFFECTS OF INVENTION

Since the carbodiimide composition of the present invention contains a phosphite antioxidant and a hindered phenol antioxidant at a predetermined ratio, the carbodiimide composition compounded with a resin is capable of controlling foaming during molding efficiently, and provides a resin molded article having excellent hydrolysis resistance and mechanical properties and a satisfactory appearance (with less air bubbles).

The carbodiimide compound having such characteristics can be suitably used as an additive in the production of resin processed articles having various shapes, such as sheets, films, various resin molded articles, and cured resins.

### DESCRIPTION OF EMBODIMENTS

Hereinafter, the present invention is described in more detail.

The carbodiimide composition according to the present invention contains a carbodiimide compound (A), a phosphite antioxidant (B), and a hindered phenol antioxidant (C), and contains 1.5 parts by weight or more and 5 parts by weight or less of the phosphite antioxidant (B) per 100 parts by weight of the carbodiimide compound (A), and 1.5 parts by weight or more and 6 parts by weight or less of the hindered phenol antioxidant (C) per 100 parts by weight of the carbodiimide compound (A).

### [1] Carbodiimide composition

### (A) Carbodiimide compound

The carbodiimide compound is not particularly limited as long as it is a carbodiimide compound (including a polycarbodiimide compound) having one or more carbodiimide groups in the molecule, and compounds produced by a conventionally known method using various polyisocyanates as raw materials can be used.

An isocyanate compound as a raw material of the carbodiimide compound is not particularly limited as long as it is a compound having two or more isocyanate groups in one molecule, and can be appropriately selected for use from various conventionally known diisocyanate compounds and the like.

Specific examples thereof include aliphatic isocyanates such as hexamethylene diisocyanate, 1,4-tetramethylene diisocyanate, 2-methylpentane-1,5-diisocyanate, dodecamethylene diisocyanate, 2,2,4-trimethylhexamethylene diisocyanate, and lysine diisocyanate; alicyclic diisocyanates such as 1,3-bis(isocyanatomethyl)cyclohexane, 1,4-bis(isocyanatomethyl)cyclohexane, 2,2-bis(4-isocyanatocyclohexyl)propane, isophorone diisocyanate, norbornane diisocyanate, dicyclomethane diisocyanate (HMDI), hydrogenated tolylene diisocyanate, hydrogenated xylylene diisocyanate, hydrogenated diphenylmethane diisocyanate, and hydrogenated tetramethylxylylene diisocyanate; diphenylmethane diisocyanates such as 1,5-naphthalene diisocyanate, 2,2'-diphenylmethane diisocyanate, and methylene diphenyl 4,4'-diisocyanate (4,4'-diphenylmethane diisocyanate), aromatic diisocyanates such as 2,4'-diphenylmethane diisocyanate, 4,4'-diphenylether diisocyanate, p-phenylene diisocyanate, m-phenylene diisocyanate, 3,3'-dimethoxy-4,4'-biphenyl diisocyanate, 2,4,6-triisopropylbenzene-1,3-diyl diisocyanate, o-tolidine diisocyanate, naphthylene diisocyanate, 2,4-tolylene diisocyanate, 2,6-tolylene diisocyanate, 3,3'-dimethyl-4,4'-diphenylether diisocyanate, and 3,3'-dimethyl-4,4'-diphenylether diisocyanate; araliphatic diisocyanates such as xylylene diisocyanate including m-xylylene diisocyanate (m-xylene diisocyanate), and tetramethylxylylene diisocyanate, nurate forms resulting from trimerization of the above-mentioned compounds, adduct forms, biuret forms, and compounds in which the terminals are capped with a blocking agent or the like, and these may be used alone or in combination of two or more thereof.

In the production of the polycarbodiimide compound, it is possible to stop the polymerization reaction in the middle by cooling or the like to control the polymerization degree to an appropriate level, and in this case, the polycarbodiimide compound has an isocyanate group at the terminal.

In addition, it is also possible to cap all or a part of the residual terminal isocyanate using an end-capping compound having a functional group capable of reacting with an isocyanate group to control the polymerization degree to an appropriate level. Control of the polymerization degree can improve compatibility with a resin or improve storage stability of the polycarbodiimide compound.

The end-capping compound is preferably a compound having one group selected from an amino group, an isocyanate group, an epoxy group, a carboxy group, and a hydroxyl group.

The end-capping compound may be either a hydrophobic compound or a hydrophilic compound.

Examples of the compound having one amino group include monoamines having a hydrocarbon group having 1 to 18 carbon atoms.

Specific examples thereof include methylamine, ethylamine, propylamine, butylamine, pentylamine, hexylamine, octylamine, dodecylamine, diethylamine, dipropylamine, dibutylamine, cyclohexylamine, adamantanamine, allylamine, aniline, diphenylamine, 3-aminopropyltrimethoxysilane, 3-aminopropyltriethoxysilane, N-phenyl-3-aminopropyltrimethoxysilane, 2,2-difluoroamine, fluorobenzylamine, trifluoroethylamine, [[4-(trifluoromethyl)cyclohexyl]methyl]amine, and derivatives thereof, and these may be used alone or in combination of two or more thereof.

Among them, cyclohexylamine is preferable from the viewpoint of versatility and the like.

A terminal isocyanate group capped with the compound having one amino group forms a urea bond by reaction with the amino group.

Examples of the compound having one isocyanate group include monoisocyanates having a hydrocarbon group having 1 to 18 carbon atoms.

Specific examples thereof include butyl isocyanate, pentyl isocyanate, hexyl isocyanate, octyl isocyanate, dodecyl isocyanate, cyclohexyl isocyanate, 1-adamantyl isocyanate, 3-isocyanatopropyltriethoxysilane, 2-isocyanatoethyl acrylate, benzyl isocyanate, 2-phenylethyl isocyanate, and derivatives thereof, and these may be used alone or in combination of two or more thereof.

Among them, cyclohexyl isocyanate is preferable from the viewpoint of reactivity and the like.

A terminal isocyanate group capped with the compound having one isocyanate group forms a carbodiimide bond (carbodiimide group) by reaction with the isocyanate group of the end-capping compound.

Specific examples of the compound having one epoxy group include 1,2-epoxyheptane, 1,2-epoxyhexane, 1,2-epoxydecane, 1,2-epoxy-5-hexene, ethyl glycidyl ether, 2-ethylhexyl glycidyl ether, glycidyl lauryl ether, allyl glycidyl ether, diethoxy(3-glycidyloxypropyl)methylsilane, 3-[2-(perfluorohexyl)ethoxy]-1,2-epoxypropane, and derivatives thereof, and these may be used alone or in combination of two or more thereof.

A terminal isocyanate group capped with the compound having one epoxy group forms an oxazolidone ring by reaction with the epoxy group.

Examples of the compound having one carboxy group include monocarboxylic acids having a hydrocarbon group having 1 to 18 carbon atoms.

Specific examples thereof include acetic acid, propionic acid, butanoic acid, pentanoic acid, hexanoic acid, heptanoic acid, octanoic acid, nonanoic acid, decanoic acid, cyclohexanecarboxylic acid, adamantane acetic acid, phenylacetic acid, benzoic acid, undecenoic acid, and derivatives thereof, and these may be used alone or in combination of two or more thereof.

A terminal isocyanate group capped with the compound having one carboxy group forms an amide bond by reaction with the carboxy group.

Examples of the compound having one hydroxyl group include monoalcohols having a hydrocarbon group having 1 to 18 carbon atoms.

Specific examples thereof include cyclohexanol, oleyl alcohol, benzyl alcohol, dodecyl alcohol, octanol, hexanol, pentanol, butanol, propanol, and ethanol, and these may be used alone or in combination of two or more thereof.

Among them, n-octanol, isopropanol, oleyl alcohol, and benzyl alcohol are preferable from the viewpoint of reactivity, versatility, and the like.

A terminal isocyanate group capped with the compound having one hydroxyl group forms a urethane bond by reaction with the hydroxyl group.

As for the monoalcohols, the compounds as described above are preferable from the viewpoint of the water resistance of the cured resin. In addition, for example, alkylene glycol derivatives such as alkylene glycol monoethers and alkylene glycol monoesters can also be used, and a compound represented by the following formula (1) is suitable.

R²(OCHR¹CH₂)ₘOH (1)

(In the formula, R¹ represents a hydrogen atom or a methyl group, R² represents a hydrocarbon group having 1 to 18 carbon atoms or an acyl group having 1 to 18 carbon atoms, and m represents an integer of 1 to 6.)

The hydrocarbon group having 1 to 18 carbon atoms may be linear, branched, or cyclic, and specific examples thereof include linear, branched, and cyclic alkyl groups such as a methyl group, an ethyl group, a n-propyl group, a n-butyl group, a n-pentyl group, a n-hexyl group, a n-heptyl group, a n-octyl group, a decyl group, a dodecyl group, a tetradecyl group, a hexadecyl group, an octadecyl group, an isopropyl group, an isobutyl group, a sec-butyl group, a tert-butyl group, a texyl group, a 2-ethylhexyl group, a cyclopentyl group, and a cyclohexyl group.

Among them, an alkyl group having 1 to 7 carbon atoms is preferable, and an alkyl group having 1 to 4 carbon atoms is more preferable.

Specific examples of the acyl group having 1 to 18 carbon atoms include a formyl group, an acetyl group, a propionyl group, a butyryl group, an isobutyryl group, a palmitoyl group, and a benzoyl group.

Among them, an acyl group having 1 to 7 carbon atoms is preferable, and an acyl group having 1 to 4 carbon atoms is more preferable.

m is an integer of 1 to 6, preferably an integer of 1 to 5, and more preferably an integer of 1 to 4.

Specific examples of the compound represented by the formula (1) include ethylene glycol monomethyl ether, diethylene glycol monomethyl ether, ethylene glycol monoethyl ether, ethylene glycol isopropyl ether, diethylene glycol monoisopropyl ether, ethylene glycol monobutyl ether, ethylene glycol monoisobutyl ether, ethylene glycol monohexyl ether, ethylene glycol mono(2-ethylhexyl) ether, ethylene glycol monoallyl ether, ethylene glycol monophenyl ether, ethylene glycol monobenzyl ether, propylene glycol monomethyl ether, dipropylene glycol monomethyl ether, dipropylene glycol monopropyl ether, propylene glycol mono-n-butyl ether, and polymers thereof; and polyethylene glycol glyceryl ether, polypropylene glycol glyceryl ether, and polypropylene glycol diglyceryl ether.

The carbodiimide compound can be produced by various methods using, as raw materials, the above-mentioned various diisocyanate compounds that are examples of the isocyanate compound. A representative example of the production method is a method in which an isocyanate-terminated carbodiimide compound is produced by a decarboxylative condensation reaction of a diisocyanate compound accompanied by carbon dioxide removal (see, for example, USP 2,941,956, JP-B S47-33279, J. Org. Chem. 28, 2069-2075 (1963), and Chemical Review 1981, Vol. 81, No. 4, pp. 619-621). In the case where end capping is carried out, it is required that reaction with a predetermined end-capping compound be carried out either after the carbodiimide compound has been synthesized or simultaneously with the synthesis thereof.

In addition to the diisocyanate compound, a compound having three or more isocyanate groups can also be used as a reaction raw material.

In particular, from the viewpoint of availability, ease of synthesis of the carbodiimide compound, and the like, the diisocyanate compound serving as a raw material for synthesizing the carbodiimide compound is preferably dicyclohexylmethane diisocyanate (HMDI), isophorone diisocyanate (IPDI), xylylene diisocyanate (XDI), hexamethylene diisocyanate (HDI), methylene diphenyl 4,4'-diisocyanate (MDI), tolylene diisocyanate (TDI), or tetramethylxylylene diisocyanate (TMXDI).

Among them, from the viewpoint of storage stability, aliphatic, alicyclic, and araliphatic diisocyanates are more preferable than aromatic diisocyanates. In particular, HMDI, IPDI, and TMXDI having a secondary or tertiary diisocyanate group are more preferable, and HMDI is still more preferable.

In the decarboxylative condensation reaction of the diisocyanate compound, a carbodiimidization catalyst is usually used.

Specific examples of the carbodiimidization catalyst include phospholene oxides such as 1-phenyl-2-phospholene-1-oxide, 3-methyl-1-phenyl-2-phospholene-1-oxide, 1-ethyl-2-phospholene-1-oxide, 3-methyl-2-phospholene-1-oxide, and 3-phospholene isomers thereof, and these may be used alone or in combination of two or more thereof.

Among them, 3-methyl-1-phenyl-2-phospholene-1-oxide is preferable from the viewpoint of reactivity.

The amount of the carbodiimidization catalyst used is not particularly limited, but is preferably 0.01 to 2.0 parts by weight per 100 parts by weight of the diisocyanate compound.

The decarboxylative condensation reaction can be carried out without a solvent, but a solvent may be used.

Specific examples of usable solvents include alicyclic ethers such as tetrahydrofuran, 1,3-dioxane, and dioxolane; aprotic water-soluble solvents such as 1-(2-methoxy-2-methylethoxy)-2-propanol, diethylene glycol methyl ethyl ether, diethylene glycol diethyl ether, diethylene glycol dimethyl ether, dipropylene glycol methyl ethyl ether, dipropylene glycol diethyl ether, dipropylene glycol dimethyl ether, triethylene glycol methyl ethyl ether, triethylene glycol diethyl ether, triethylene glycol dimethyl ether, tetraethylene glycol methyl ethyl ether, tetraethylene glycol diethyl ether, tetraethylene glycol dimethyl ether, diethylene glycol monoethyl ether acetate, diethylene glycol monomethyl ether acetate, dipropylene glycol monoethyl ether acetate, dipropylene glycol monomethyl ether acetate, γ-butyrolactone, N-methylpyrrolidone, N-ethylpyrrolidone, N,N-dimethylformamide, and N,N-dimethylacetamide, aromatic hydrocarbons such as benzene, toluene, xylene, and ethylbenzene; halogenated hydrocarbons such as chlorobenzene, dichlorobenzene, trichlorobenzene, perclene, trichloroethane, and dichloroethane; and cyclohexanone, and these may be used alone or in combination of two or more thereof.

In a reaction carried out in a solvent, the concentration of the diisocyanate compound is preferably 5 to 55 wt%, and more preferably 5 to 20 wt%.

The reaction temperature is not particularly limited, but is preferably 40 to 250°C, and more preferably 80 to 195°C. In a reaction carried out in a solvent, the reaction temperature is preferably in a range of 40°C to the boiling point of the solvent.

The reaction time is preferably 0.5 to 80 hours, and more preferably 1 to 70 hours.

The atmosphere of the reaction is not particularly limited, but an inert gas atmosphere such as a nitrogen gas or rare gas atmosphere is preferable.

In the case where end capping is carried out and the end-capping compound is a compound having one isocyanate group, an end-capped carbodiimide compound can be obtained, for example, by stirring and mixing the end-capping compound and the diisocyanate compound in the presence of a carbodiimidization catalyst preferably at 40 to 200°C, and more preferably at 80 to 195°C for about 10 to 70 hours.

In the case where the end-capping compound is a compound other than a compound having one isocyanate group, an end-capped carbodiimide compound can be obtained, for example, by adding the end-capping compound to an isocyanate-terminated carbodiimide compound preferably at 40 to 250°C, and more preferably at 80 to 195°C, and additionally stirring and mixing the components at about 80 to 200°C for about 0.5 to 5 hours.

The polymerization degree of the carbodiimide compound (polymerization degree of the carbodiimide group) is not particularly limited, but is preferably 5 or more, more preferably 5 to 30, still more preferably 5 to 25, and even more preferably 5 to 20 from the viewpoint of compatibility with a resin and the like.

In the present description, the "polymerization degree of the carbodiimide group" refers to the number of carbodiimide groups produced by a decarboxylative condensation reaction between diisocyanate compounds in the carbodiimide compound.

The carbodiimide compound may be used alone or in combination of two or more thereof.

### (B) Phosphite antioxidant

The phosphite antioxidant used in the carbodiimide composition of the present invention can be appropriately selected from conventionally known compounds.

Specific examples thereof include tris(2,4-di-tert-butylphenyl)phosphite (Irgafos 168 manufactured by BASF Japan Ltd., ADK STAB 2112 manufactured by ADEKA CORPORATION, and the like), bis(2,4-di-tert-butylphenyl)pentaerythritol diphosphite (Irgafos 126 manufactured by BASF Japan Ltd., ADK STAB PEP-24G manufactured by ADEKA CORPORATION, and the like), 3,9-bis(2,6-di-tert-butyl-4-methylphenoxy)-2,4,8,10-tetraoxa-3,9-diphosphaspiro[5.5]undecane (bis(2,6-di-tert-butyl-4-methylphenyl)pentaerythritol diphosphite) (ADK STAB PEP-36 manufactured by ADEKA CORPORATION), and 3,9-bis(octadecyloxy)-2,4,8,10-tetraoxa-3,9-diphosphaspiro[5.5]undecane (distearyl pentaerythritol diphosphite) (ADK STAB PEP-8 manufactured by ADEKA CORPORATION, JPP-2000PT manufactured by Johoku Chemical Co., Ltd., and the like), and these may be used alone or in combination of two or more thereof.

Among them, from the viewpoint of controlling foaming during molding of the resin composition and improving the hydrolysis resistance of the resin molded article, compounds having a pentaerythritol structure are preferable, and 3,9-bis(2,6-di-tert-butyl-4-methylphenoxy)-2,4,8,10-tetraoxa-3,9-diphosphaspiro[5.5]undecane and 3,9-bis(octadecyloxy)-2,4,8,10-tetraoxa-3,9-diphosphaspiro[5.5]undecane are more preferable.

### (C) Hindered phenol antioxidant

The hindered phenol antioxidant used in the carbodiimide composition of the present invention can be appropriately selected from conventionally known compounds. In consideration of preventing scattering and volatilization, preventing bleeding out from the resin molded article and migration to an article coming into contact with the resin molded article, and improving the heat resistance of the resin molded article, a compound having a molecular weight of 400 or more is preferable, and a compound having a molecular weight of 500 or more is more preferable.

Specific examples of the hindered phenol antioxidant include 4,4'-methylene-bis(2,6-di-tert-butylphenol) (MW = 420), octadecyl 3-(3,5-di-tert-butyl-4-hydroxyphenyl)propionate (MW = 531) (Irganox 1076 manufactured by BASF Japan Ltd. and ADK STAB AO-50 manufactured by ADEKA CORPORATION), bis[3-(3,5-di-tert-butyl-4-hydroxyphenyl)propionic acid][2,2-bis[[1-oxo-3-(3,5-di-tert-butyl-4-hydroxyphenyl)propoxy]methyl]propane]-1,3-diyl (pentaerythritol tetrakis[3-(3,5-di-tert-butyl-4-hydroxyphenyl)propionate]) (MW = 1178, Irganox 1010 manufactured by BASF Japan Ltd. and ADK STAB AO-60 manufactured by ADEKA CORPORATION), and bis[3-[3-(tert-butyl)-4-hydroxy-5-methylphenyl]propanoic acid]2,4,8,10-tetraoxaspiro-[5.5]undecane-3,9-diylbis(2-methylpropane-2,1-diyl) (3,9-bis[2-[3-(3-tert-butyl-4-hydroxy-5-methylphenyl)propionyloxy]-1,1-dimethylethyl]-2,4,8,10-tetraoxaspiro[5.5]undecane) (MW = 741, trade name Sumilizer GA-80 manufactured by Sumitomo Chemical Co., Ltd. and ADK STAB AO-80 manufactured by ADEKA CORPORATION), and these may be used alone or in combination of two or more thereof.

Among them, from the viewpoint of controlling foaming during molding of the resin composition and improving the hydrolysis resistance of the resin molded article, compounds having a pentaerythritol structure are preferable as with the case of the phosphite antioxidant, and bis[3-(3,5-di-tert-butyl-4-hydroxyphenyl)propionic acid][2,2-bis[[1-oxo-3-(3,5-di-tert-butyl-4-hydroxyphenyl)propoxy]methyl]propane]-1,3-diyl and bis[3-[3-(tert-butyl)-4-hydroxy-5-methylphenyl]propanoic acid]2,4,8,10-tetraoxaspiro[5.5]-undecane-3,9-diylbis(2-methylpropane-2,1-diyl) are more preferable.

As described above, the carbodiimide composition of the present invention contains the phosphite antioxidant (B) in an amount of 1.5 parts by weight or more and 5 parts by weight or less, preferably 1.7 to 4.9 parts by weight, and more preferably 1.7 to 4.5 parts by weight per 100 parts by weight of the carbodiimide compound (A), and contains the hindered phenol antioxidant (C) in an amount of 1.5 parts by weight or more and 6 parts by weight or less, preferably 1.7 to 4.9 parts by weight, and more preferably 1.7 to 4.5 parts by weight per 100 parts by weight of the carbodiimide compound (A). Combination use of these two antioxidants in the above-mentioned amounts can control foaming during molding of the resin composition efficiently, and can also improve the hydrolysis resistance of the resin molded article obtained from the resin composition.

In particular, if either of the contents of the phosphite antioxidant (B) and the hindered phenol antioxidant (C) is less than 1.5 wt%, the effect of controlling foaming during resin molding is insufficient, and if the content of the phosphite antioxidant (B) is more than 5 parts by weight or if the content of the hindered phenol antioxidant (C) is more than 6 parts by weight, the effect of reducing the hydrolysis of the resin molded article obtained from the resin composition is insufficient.

In the case where at least one of the phosphite antioxidant and the hindered phenol antioxidant has a pentaerythritol structure, the performance is improved, and when both the phosphite antioxidant and the hindered phenol antioxidant have a pentaerythritol structure, the performance is further improved.

In the present invention, the ratio between the phosphite antioxidant (B) used and the hindered phenol antioxidant (C) used is not particularly limited as long as the desired effect of the present invention is exhibited. However, in consideration of further enhancing the effect of controlling foaming during resin molding and the effect of improving the hydrolysis resistance of the resin molded article, the amount of the hindered phenol antioxidant (C) used is preferably set to be equal to or more than the amount of the phosphite antioxidant (B) used, that is, the weight ratio of the phosphite antioxidant (B) to the hindered phenol antioxidant (C) in the carbodiimide composition is preferably phosphite antioxidant (B) : hindered phenol antioxidant (C) = 1 : 1 or more, and more preferably phosphite antioxidant (B) : hindered phenol antioxidant (C) = 1 : 1 to 1 : 2.

The method for producing the carbodiimide composition of the present invention is not particularly limited, and the carbodiimide composition may be prepared by mixing the above-mentioned components (A) to (C) in an arbitrary order.

In addition, as disclosed in Patent Document 2 described above, the two antioxidants, that is, the component (B) and the component (C) may be added in advance at the time of synthesizing the carbodiimide compound, that is, the component (A) so that the amounts of the components (B) and (C) in the final composition are as described above, and in such a case, coloring at the time of synthesis of the carbodiimide compound can be reduced. In this case, the timing of addition of the antioxidants is preferably during charging of the raw materials, but may be during the reaction.

### (D) Other components

The carbodiimide composition of the present invention may contain, in addition to the various components described above, additives such as an antioxidant other than the components (B) and (C), an ultraviolet absorber, a thickener, an antifoaming agent, and a wettability improver as long as the effects of the present invention are not impaired, but it is preferable that the carbodiimide composition does not contain components other than the components (A) to (C).

### [2] Resin composition

The resin composition of the present invention contains the carbodiimide composition described above and a resin.

Since the resin composition contains the carbodiimide composition, foaming during molding is efficiently controlled, and as a result, the resin composition provides a resin molded article with less air bubbles inside and having a satisfactory appearance.

The resin that constitutes the resin composition may be a thermoplastic resin or a thermosetting resin.

The thermoplastic resin is not particularly limited, and can be appropriately selected from conventionally known thermoplastic resins such as polyester resins including polylactic acid, polyethylene terephthalate, and polybutylene terephthalate; polycarbonate resins; polyamide resins; polyetherimide resins; polyolefin resins including polyethylene and polypropylene; polystyrene resins; polyurethane resins; polyamideimide resins; polybenzimidazole resins; polycarbonate resins; polyvinyl chloride resins and polyvinylidene chloride resins; polysulfone resins; polyphenylene sulfide resins; polyether sulfone resins; and polyarylene sulfide resins.

The thermosetting resin is not particularly limited, and can be appropriately selected from conventionally known thermosetting resins such as a phenol resin, an epoxy resin, a melamine resin, a urea resin, an unsaturated polyester resin, a polyurethane resin, an alkyd resin, and a silicone resin.

Since the resin molded article obtained from the resin composition of the present invention contains two antioxidants carried over from the carbodiimide composition and thus exhibits hydrolysis resistance, it is more effective to use, as the above-mentioned resin, an ester bond-containing resin that easily causes hydrolysis, such as a polyester resin.

The method for producing the resin composition is not particularly limited, but a suitable method includes mixing a carbodiimide composition prepared in advance by the above-mentioned method with a resin.

In this case, a solvent may be used as necessary.

Examples of the solvent include the same solvents as those mentioned in the dehydration condensation reaction.

In the resin composition of the present invention, the content of the carbodiimide composition is not particularly limited as long as the desired effect of controlling foaming and hydrolysis resistance are exhibited. However, at the above-mentioned compounding ratios of the antioxidants in the carbodiimide composition, the content of the carbodiimide composition is preferably 0.01 to 5 parts by weight, more preferably 0.1 to 10 parts by weight, and still more preferably 0.5 to 5 parts by weight per 100 parts by weight of the thermoplastic resin.

To the resin composition of the present invention, various additive components, for example, reinforcing materials, clays, layered silicates, talc, mica, inorganic and organic fillers, other antioxidants, heat stabilizers, hindered amine light stabilizers, ultraviolet absorbers, flame retardants, lubricants, waxes, pigments, dyes, colorants, crystallization promoters, titanium oxide, and decomposable organic substances such as starch may be added as necessary depending on the intended use of the resin composition and the like.

The resin composition of the present invention can be formed into various molded articles such as an extrusion molded article, a sheet, a film, and an injection molded article by various molding methods applicable depending on the resin used, such as extrusion molding, injection molding, calender molding, blow molding, transfer molding, and compression molding, or can be formed into a cured resin.

In this case, it is also possible to separately put the carbodiimide composition and the resin into a molding machine and knead them using a screw or the like to mold them while preparing the resin composition.

As for various molding conditions such as the heating temperature during molding, it is preferable to select conditions suitable for the used resin.

### EXAMPLES

Hereinafter, the present invention is described more specifically with reference to Synthesis Examples, Examples, and Comparative Examples, but the present invention is not limited to the following Examples.

Details of the compounds used in Synthesis Examples and Examples are as follows.
(1) Diisocyanate compound
   Dicyclohexylmethane diisocyanate
      (HMDI, manufactured by Tokyo Chemical Industry Co., Ltd.)
   Tetramethylxylylene diisocyanate
      (TMXDI, manufactured by Tokyo Chemical Industry Co., Ltd.)
   Diphenylmethane diisocyanate
      (MDI, Lupranate MI, 2,4-MDI/4,4-MDI = 3/7, manufactured by BASF INOAC Polyurethanes Ltd.)
   Isophorone diisocyanate (IPDI, manufactured by Tokyo Chemical Industry Co., Ltd.)
   Tolylene diisocyanate (TDI, manufactured by Tokyo Chemical Industry Co., Ltd.)
   m-Xylylene diisocyanate (XDI, manufactured by Tokyo Chemical Industry Co., Ltd.)
   Hexamethylene diisocyanate (HDI, manufactured by Tokyo Chemical Industry Co., Ltd.)
(2) End-capping compound
   Cyclohexylamine (CHA, manufactured by Tokyo Chemical Industry Co., Ltd.)
   Dibutylamine (DBA, manufactured by Tokyo Chemical Industry Co., Ltd.)
   Polyethylene glycol monomethyl ether 220
      (MPEG, manufactured by KANTO CHEMICAL CO., INC.)
   1-Octanol (OA, manufactured by Tokyo Chemical Industry Co., Ltd.)
   Cyclohexyl isocyanate (CHI, manufactured by Tokyo Chemical Industry Co., Ltd.)
(3) Carbodiimidization catalyst
   3-Methyl-1-phenyl-2-phospholene-1-oxide
   (manufactured by Tokyo Chemical Industry Co., Ltd.)
(4) Phosphite antioxidant
   3,9-Bis(2,6-di-tert-butyl-4-methylphenoxy)-2,4,8,10-tetraoxa-3,9-diphosphaspiro[5.5]undecane
      (phosphite compound BA, ADK STAB PEP-36 manufactured by ADEKA CORPORATION)
   3,9-Bis(octadecyloxy)-2,4,8,10-tetraoxa-3,9-diphosphaspiro[5.5]undecane (phosphite compound BB, ADK STAB PEP-8 manufactured by ADEKA CORPORATION)
   Trisnonylphenyl phosphite
      (phosphite compound BC, ADK STAB 2112 manufactured by ADEKA CORPORATION)
(5) Hindered phenol antioxidant
   Bis[3-[3-(tert-butyl)-4-hydroxy-5-methylphenyl]propanoic acid]2,4,8,10-tetraoxaspiro[5.5]undecane-3,9-diylbis(2-methylpropane-2,1-diyl) (hindered phenol compound CA, ADK STAB AO-60 manufactured by ADEKA CORPORATION)
   Bis [3 -(3,5 -di-tert-butyl-4-hydroxyphenyl)propionic acid][2,2-bis[[1-oxo-3-(3,5-di-tert-butyl-4-hydroxyphenyl)propoxy]methyl]propane]-1,3-diyl (hindered phenol compound CB, ADK STAB AO-80 manufactured by ADEKA CORPORATION)
   Octadecyl 3-(3,5-di-tert-butyl-4-hydroxyphenyl)propionate
      (hindered phenol compound CC, ADK STAB AO-50 manufactured by ADEKA CORPORATION)
(6) Solvent
   Cyclohexanone (manufactured by Tokyo Chemical Industry Co., Ltd.)
(7) Other compounds
   Pentaerythritol tetrakis[3-(dodecylthio)propionate]
   (thioether compound, ADK STAB AO-412S manufactured by ADEKA CORPORATION)

### [1] Preparation of polycarbodiimide composition

In the following, an infrared absorption (IR) spectrum was measured using FTIR-8200PC manufactured by Shimadzu Corporation.

In addition, the polymerization degree of the carbodiimide group in the following Synthesis Examples was determined as follows depending on the synthesis method.
(1) In the case where a polycarbodiimide compound was synthesized by simultaneously compounding a diisocyanate compound and an end-capping compound, the polymerization degree of the carbodiimide group is a value determined by calculation.
(2) In the case where an isocyanate-terminated polycarbodiimide was synthesized by a polycarbodiimidization reaction of a diisocyanate compound, and then a terminal isocyanate group was capped using an end-capping compound to synthesize a polycarbodiimide compound, the polymerization degree of the carbodiimide group was determined for the isocyanate-terminated polycarbodiimide by a potentiometric titration method (apparatus used: automatic titrator "COM-900" manufactured by Hiranuma Sangyo Co., Ltd.). Specifically, a toluene solution of di-n-butylamine having a known concentration was mixed with the isocyanate-terminated polycarbodiimide obtained by the carbodiimidization reaction to react the terminal isocyanate group with di-n-butylamine, and the residual di-n-butylamine was neutralized and titrated with a hydrochloric acid standard solution to calculate the residual amount of isocyanate groups (terminal NCO amount [wt%]). From the terminal NCO amount, the polymerization degree of the carbodiimide group was determined.

### [Synthesis Example 1]

In a reaction vessel equipped with a reflux tube and a stirrer, 262 parts by weight of HMDI and 2.6 parts by weight of a carbodiimidization catalyst were placed, and stirred at 170°C for 18 hours under a nitrogen stream to give an isocyanate-terminated polycarbodiimide compound having isocyanate groups at both terminals (amount of terminal isocyanate groups: 3.43 wt%). An absorption peak of the carbodiimide group having a wavenumber of around 2150 cm⁻¹ was observed by IR spectrum measurement (polymerization degree of carbodiimide compound: 10).

The obtained isocyanate-terminated polycarbodiimide compound was dissolved at 150°C, 18.0 parts by weight of cyclohexylamine as an end-capping compound was added thereto, and the mixture was heated to 180°C and reacted for 2 hours with stirring. Then, 4.0 parts by weight of the phosphite compound BA and 4.0 parts by weight of the hindered phenol compound CA were added, and the mixture was mixed for 0.5 hours. The mixture was taken out from the reaction vessel and cooled to room temperature (25°C) to give a polycarbodiimide composition (1) (theoretical carbodiimide group concentration: 14.6%).

### [Synthesis Examples 2 to 9 and 23 to 28]

The polymerization degree of the carbodiimide compound (A), the end-capping compound, the carbodiimidization catalyst, the phosphite compound, the hindered phenol compound, and other compounds in Synthesis Example 1 were changed according to Table 1 to give polycarbodiimide compositions (2) to (9) and (23) to (28).

### [Synthesis Example 10]

In a reaction vessel equipped with a reflux tube and a stirrer, 262 parts by weight of HMDI and 2.6 parts by weight of a carbodiimidization catalyst were placed, and stirred at 170°C for 24 hours under a nitrogen stream to give an isocyanate-terminated polycarbodiimide compound having isocyanate groups at both terminals (amount of terminal isocyanate groups: 1.81 wt%). An absorption peak of the carbodiimide group having a wavenumber of around 2150 cm⁻¹ was observed by IR spectrum measurement (polymerization degree of carbodiimide compound: 20).

To the obtained isocyanate-terminated polycarbodiimide compound, 10.0 parts by weight of the phosphite compound BA and 10.0 parts by weight of the hindered phenol compound CA were added, and the mixture was mixed for 0.5 hours. The mixture was taken out from the reaction vessel and cooled to room temperature (25°C) to give a polycarbodiimide composition (10) (theoretical carbodiimide group concentration: 15.8%).

### [Synthesis Examples 11 to 15 and 29]

The polymerization degree of the carbodiimide compound (A), the carbodiimidization catalyst, the phosphite compound, and the hindered phenol compound in Synthesis Example 10 were changed according to Tables 1 and 2 to give polycarbodiimide compositions (11) to (15) and (29).

### [Synthesis Example 16]

In a reaction vessel equipped with a reflux tube and a stirrer, 262 parts by weight of HMDI, 41.7 parts by weight of CHI, and 2.6 parts by weight of a carbodiimidization catalyst were placed, and reacted by stirring at 180°C for 47 hours under a nitrogen stream. In IR spectrum measurement, it was observed that the ratio of the absorption peak of the isocyanate group having a wavenumber of 2200 to 2300 cm⁻¹ to the absorption peak of the carbodiimide group having a wavenumber of 2000 to 2200 cm⁻¹ was reduced to 0.05 or less. Then, 5.0 parts by weight of the phosphite compound BA and 5.0 parts by weight of the hindered phenol compound CA were added, and the mixture was mixed for 0.5 hours. The mixture was taken out from the reaction vessel and cooled to room temperature (25°C) to give a polycarbodiimide composition (16) (theoretical carbodiimide group concentration: 17.8%).

### [Synthesis Example 17]

In a reaction vessel equipped with a reflux tube and a stirrer, 244 parts by weight of TMXDI and 2.4 parts by weight of a carbodiimidization catalyst were placed, and stirred and mixed at 170°C for 18 hours under a nitrogen stream to perform a carbodiimidization reaction, thereby obtaining an isocyanate-terminated polycarbodiimide compound having isocyanate groups at both terminals (amount of terminal isocyanate groups: 3.74 wt%). An absorption peak of the carbodiimide group having a wavenumber of around 2150 cm⁻¹ was observed by IR spectrum measurement (polymerization degree of carbodiimide compound: 10).

The obtained isocyanate-terminated polycarbodiimide compound was dissolved at 150°C, 23.5 parts by weight of dibutylamine as an end-capping compound was added thereto, and the mixture was heated to 180°C and reacted for 2 hours with stirring. Then, 6.0 parts by weight of the phosphite compound BA and 4.0 parts by weight of the hindered phenol compound CA were added, and the mixture was mixed for 0.5 hours. The mixture was taken out from the reaction vessel and cooled to room temperature (25°C) to give a polycarbodiimide composition (17) (theoretical carbodiimide group concentration: 15.3%).

### [Synthesis Example 18]

In a reaction vessel equipped with a reflux tube and a stirrer, 252 parts by weight of MDI, 2.5 parts by weight of a carbodiimidization catalyst, 43.4 parts by weight of dibutylamine as an end-capping compound, and 190 parts by weight of cyclohexanone as a solvent were placed, and reacted by stirring and mixing at 120°C for 5 hours under a nitrogen stream. In IR spectrum measurement, it was observed that the ratio of the absorption peak of the isocyanate group having a wavenumber of 2200 to 2300 cm⁻¹ to the absorption peak of the carbodiimide group having a wavenumber of 2000 to 2200 cm⁻¹ was reduced to 0.05 or less. Then, 6.0 parts by weight of the phosphite compound BA and 4.0 parts by weight of the hindered phenol compound CA were added, and the mixture was mixed for 0.5 hours.

After completion of the mixing, the solvent was distilled off under reduced pressure, and the reaction product was taken out from the reaction vessel and cooled to room temperature (25°C) to give a polycarbodiimide composition (18) (theoretical carbodiimide group concentration: 12.5%).

### [Synthesis Example 19]

In a reaction vessel equipped with a reflux tube and a stirrer, 222 parts by weight of IPDI, 43.4 parts by weight of dibutylamine as an end-capping compound, and 2.2 parts by weight of a carbodiimidization catalyst were placed, and reacted by stirring and mixing at 150°C for 24 hours under a nitrogen stream. In IR spectrum measurement, it was observed that the ratio of the absorption peak of the isocyanate group having a wavenumber of 2200 to 2300 cm⁻¹ to the absorption peak of the carbodiimide group having a wavenumber of 2000 to 2200 cm⁻¹ was reduced to 0.05 or less.

Then, 3.0 parts by weight of the phosphite compound BA and 4.0 parts by weight of the hindered phenol compound CA were added, and the mixture was mixed for 0.5 hours.

After completion of the mixing, the mixture was taken out from the reaction vessel and cooled to room temperature (25°C) to give a polycarbodiimide composition (19) (theoretical carbodiimide group concentration: 17.1%).

### [Synthesis Example 20]

In a reaction vessel equipped with a reflux tube and a stirrer, 175 parts by weight of TDI, 43.3 parts by weight of dibutylamine as an end-capping compound, 1.8 parts by weight of a carbodiimidization catalyst, and 205 parts by weight of cyclohexanone as a solvent were placed, and reacted by stirring and mixing at 150°C for 4 hours under a nitrogen stream. In IR spectrum measurement, it was observed that the ratio of the absorption peak of the isocyanate group having a wavenumber of 2200 to 2300 cm⁻¹ to the absorption peak of the carbodiimide group having a wavenumber of 2000 to 2200 cm⁻¹ was reduced to 0.05 or less.

Then, 3.0 parts by weight of the phosphite compound BA and 4.0 parts by weight of the hindered phenol compound CA were added, and the mixture was mixed for 0.5 hours. After completion of the mixing, the solvent was distilled off under reduced pressure, and the reaction product was taken out from the reaction vessel and cooled to room temperature (25°C) to give a polycarbodiimide composition (20) (theoretical carbodiimide group concentration: 17.8%).

### [Synthesis Example 21]

In a reaction vessel equipped with a reflux tube and a stirrer, 188 parts by weight of XDI, 43.0 parts by weight of dibutylamine as an end-capping compound, 1.9 parts by weight of a carbodiimidization catalyst, and 205 parts by weight of cyclohexanone as a solvent were placed, and reacted by stirring and mixing at 100°C for 4 hours under a nitrogen stream. In IR spectrum measurement, it was observed that the ratio of the absorption peak of the isocyanate group having a wavenumber of 2200 to 2300 cm⁻¹ to the absorption peak of the carbodiimide group having a wavenumber of 2000 to 2200 cm⁻¹ was reduced to 0.05 or less.

Then, 3.0 parts by weight of the phosphite compound BA and 4.0 parts by weight of the hindered phenol compound CA were added, and the mixture was mixed for 0.5 hours.

After completion of the mixing, the solvent was distilled off under reduced pressure, and the reaction product was taken out from the reaction vessel and cooled to room temperature (25°C) to give a polycarbodiimide composition (21) (theoretical carbodiimide group concentration: 16.5%).

### [Synthesis Example 22]

In a reaction vessel equipped with a reflux tube and a stirrer, 168 parts by weight of HDI, 43.0 parts by weight of dibutylamine as an end-capping compound, 1.7 parts by weight of a carbodiimidization catalyst, and 205 parts by weight of cyclohexanone as a solvent were placed, and reacted by stirring and mixing at 150°C for 18 hours under a nitrogen stream. In IR spectrum measurement, it was observed that the ratio of the absorption peak of the isocyanate group having a wavenumber of 2200 to 2300 cm⁻¹ to the absorption peak of the carbodiimide group having a wavenumber of 2000 to 2200 cm⁻¹ was reduced to 0.05 or less.

Then, 3.0 parts by weight of the phosphite compound BA and 4.0 parts by weight of the hindered phenol compound CA were added, and the mixture was mixed for 0.5 hours.

After completion of the mixing, the solvent was distilled off under reduced pressure, and the reaction product was taken out from the reaction vessel and cooled to room temperature (25°C) to give a polycarbodiimide composition (22) (theoretical carbodiimide group concentration: 18.4%).

A summary of the Synthesis Examples is shown in Tables 1 and 2.

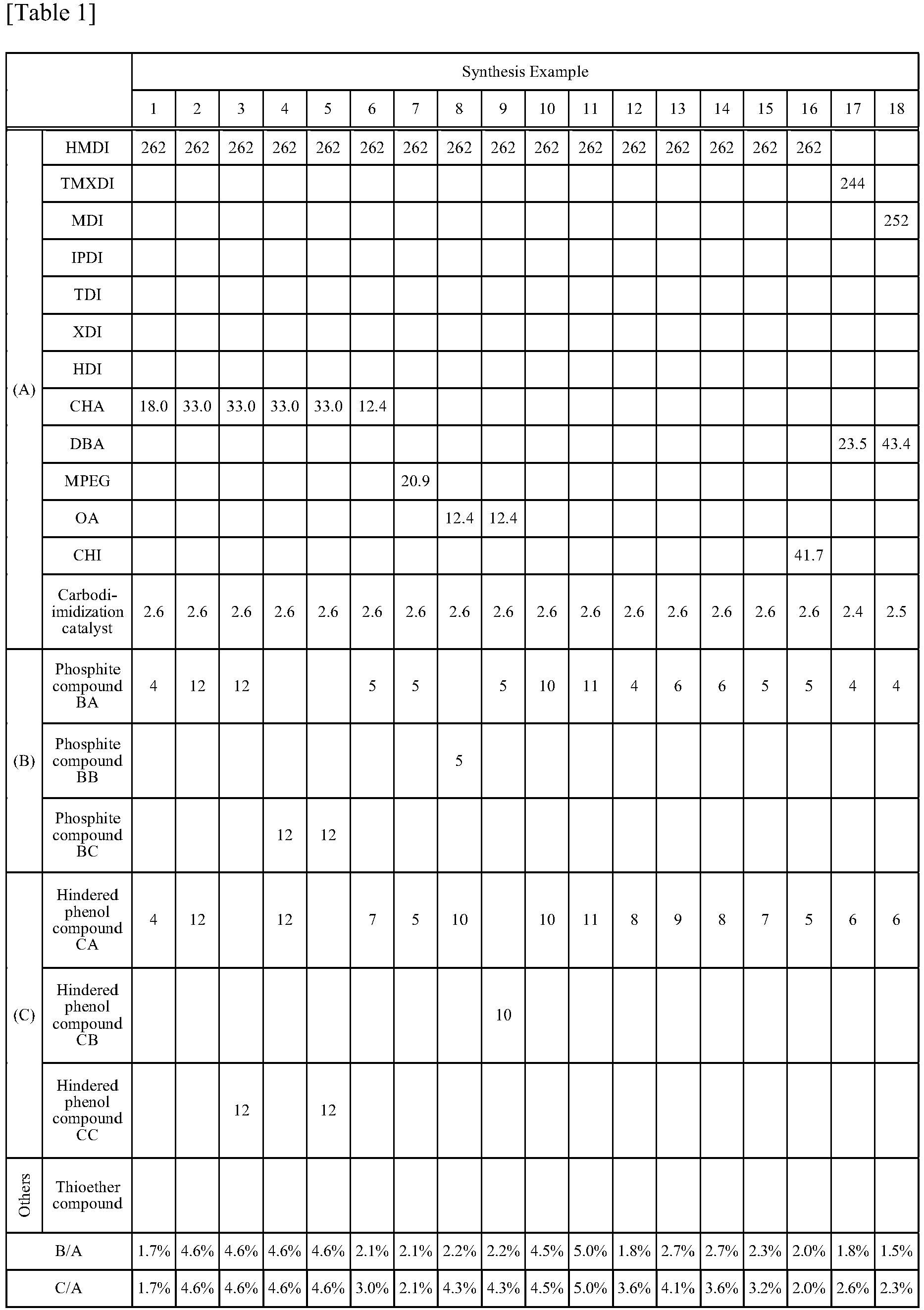

**[Table 2]**

| | | Synthesis Example | | | | | | | | | | |
|---|---|---|---|---|---|---|---|---|---|---|---|---|
| | | 19 | 20 | 21 | 22 | 23 | 24 | 25 | 26 | 27 | 28 | 29 |
| (A) | HMDI | | | | | 262 | 262 | 262 | 262 | 262 | 262 | 100 |
| | TMXDI | | | | | | | | | | | |
| | MDI | | | | | | | | | | | |
| | IPDI | 222 | | | | | | | | | | |
| | TDI | | 175 | | | | | | | | | |
| | XDI | | | 188 | | | | | | | | |
| | HDI | | | | 168 | | | | | | | |
| | CHA | | | | | 18.0 | 18.0 | 18.0 | 18.0 | 18.0 | 18.0 | |
| | DBA | 23.5 | 43.3 | 43.0 | 43.0 | | | | | | | |
| | MPEG | | | | | | | | | | | |
| | OA | | | | | | | | | | | |
| | CHI | | | | | | | | | | | |
| | Carbodiimidization catalyst | 2.2 | 1.8 | 1.9 | 1.7 | 2.6 | 2.6 | 2.6 | 2.6 | 2.6 | 2.6 | 0.5 |
| (B) | Phosphite compound BA | 3 | 3 | 3 | 3 | | 8 | | 13 | 4 | | 1 |
| | Phosphite compound BB | | | | | | | | | | | |
| | Phosphite compound BC | | | | | | | | | | | |
| (C) | Hindered phenol compound CA | 4 | 4 | 4 | 4 | | | 8 | 13 | 15 | | |
| | Hindered phenol compound CB | | | | | | | | | | | 1 |
| | Hindered phenol compound CC | | | | | | | | | | | |
| Others | Thioether compound | | | | | | | | | | 10 | |
| B/A | | 1.5% | 1.7% | 1.5% | 1.7% | 0.0% | 3.3% | 0.0% | 5.4% | 1.7% | 0.0% | 1.2% |
| C/A | | 1.9% | 2.2% | 2.1% | 2.3% | 0.0% | 0.0% | 3.3% | 5.4% | 6.2% | 0.0% | 1.2% |

### [2] Preparation of resin composition

In the following, various resin compositions were prepared so that each of the resin compositions may contain, according to the theoretical carbodiimide group concentration of the obtained polycarbodiimide composition, 0.15 parts by weight of the carbodiimide group in the obtained polycarbodiimide composition per 100 parts by weight of the resin.

### [Example 1]

After 100 parts by weight of a PBAT resin (ecoflex F Blend C1200 manufactured by BASF, the same applies hereinafter) was melted at 160°C using a laboratory mixer, 1.0 part by weight of the polycarbodiimide composition (1) obtained in Synthesis Example 1 was added with mixing, and the mixture was kneaded for 3 minutes to give a PBAT resin composition.

### [Examples 2 to 22 and Comparative Examples 1 to 7]

PBAT resin compositions were obtained in the same manner as in Example 1 except that as shown in Tables 3 and 4, the polycarbodiimide composition (1) was changed to the polycarbodiimide compositions (2) to (29) respectively obtained in Synthesis Examples 2 to 29, and the compounding amounts of the compositions were changed to those shown in Tables 3 and 4. In Tables 3 and 4, a blank indicates that the compounding amount was 0.

### [Comparative Example 8]

As shown in Table 4, after 100 parts by weight of the PBAT resin was melted at 160°C using a laboratory mixer, 1.0 part by weight of the polycarbodiimide composition (22) obtained in Synthesis Example 22, 0.04 parts by weight of the phosphite compound BA, and 0.04 parts by weight of the hindered phenol compound CA were added with mixing, and the mixture was kneaded for 3 minutes to give a PBAT resin composition.

### [Example 23]

After 100 parts by weight of a PBSA resin (FD92PM manufactured by Mitsubishi Chemical Corporation, the same applies hereinafter) was melted at 130°C using a laboratory mixer, 1.0 part by weight of the polycarbodiimide composition (1) obtained in Synthesis Example 1 was added with mixing, and the mixture was kneaded for 3 minutes to give a PBSA resin composition.

### [Example 24 and Comparative Example 9]

PBSA resin compositions were obtained in the same manner as in Example 23 except that as shown in Table 5, the polycarbodiimide composition (1) was changed to the polycarbodiimide compositions (10) and (22) respectively obtained in Synthesis Examples 10 and 22. In Table 5, a blank indicates that the compounding amount was 0.

### [Comparative Example 10]

As shown in Table 5, after 100 parts by weight of the PBSA resin was melted at 130°C using a laboratory mixer, 1.0 part by weight of the polycarbodiimide composition (22) obtained in Synthesis Example 22, 0.04 parts by weight of the phosphite compound BA, and 0.04 parts by weight of the hindered phenol compound CA were added with mixing, and the mixture was kneaded for 3 minutes to give a PBSA resin composition.

### [Example 25]

After 100 parts by weight of a PLA resin (4032D manufactured by Nature Works LLC, the same applies hereinafter) was melted at 200°C using a laboratory mixer, 1.0 part by weight of the polycarbodiimide composition (1) obtained in Synthesis Example 1 was added with mixing, and the mixture was kneaded for 3 minutes to give a PLA resin composition.

### [Example 26 and Comparative Example 11]

PLA resin compositions were obtained in the same manner as in Example 25 except that as shown in Table 5, the polycarbodiimide composition (1) was changed to the polycarbodiimide compositions (10) and (22) respectively obtained in Synthesis Examples 10 and 22.

### [Comparative Example 12]

After 100 parts by weight of the PLA resin was melted at 200°C using a laboratory mixer, 1.0 part by weight of the polycarbodiimide composition (22) obtained in Synthesis Example 22, 0.04 parts by weight of the phosphite compound BA, and 0.04 parts by weight of the hindered phenol compound CA were added with mixing, and the mixture was kneaded for 3 minutes to give a PLA resin composition.

### [Example 27]

After 100 parts by weight of a PET resin (manufactured by China Petroleum and Chemical Corporation, the same applies hereinafter) was melted at 270°C using a laboratory mixer, 0.5 parts by weight of the polycarbodiimide composition (1) obtained in Synthesis Example 1 was added with mixing, and the mixture was kneaded for 3 minutes to give a PET resin composition.

### [Example 28 and Comparative Example 13]

PET resin compositions were obtained in the same manner as in Example 24 except that as shown in Table 5, the polycarbodiimide composition (1) was changed to the polycarbodiimide compositions (10) and (22) respectively obtained in Synthesis Examples 10 and 22.

### [Comparative Example 14]

After 100 parts by weight of the PET resin was melted at 270°C using a laboratory mixer, 0.5 parts by weight of the polycarbodiimide composition (22) obtained in Synthesis Example 22, 0.02 parts by weight of the phosphite compound BA, and 0.02 parts by weight of the hindered phenol compound CA were added with mixing, and the mixture was kneaded for 3 minutes to give a PET resin composition.

A summary of the Examples and Comparative Examples is shown in Tables 3 to 5.

The resin compositions obtained in the Examples and Comparative Examples were subjected to a hydrolysis resistance test and observation of foaming in the sheet by the following methods. The results are collectively shown in Tables 3 to 5.

### (1) Hydrolysis resistance test (PBAT)

A melt-kneaded resin was subjected to flat plate pressing at a temperature equal to or higher than the softening point of the resin to produce a sheet having a thickness of about 300 µm, and strip sheets each having a width of 10 mm and a length of 70 mm were produced from the sheet. Then, the tensile strength of the produced strip sheets was measured with a tensile tester (product name "INSTRON 3365" manufactured by INSTRON, the same applies hereinafter), and the tensile strength was taken as the initial strength. The tensile strength was measured for 5 pieces (5 strip sheets) as for each sample at room temperature (20°C ± 5°C) using the tensile tester, and the average of the measured values (N = 5) was taken as the tensile strength of the sample (the same applies hereinafter). Further, the produced strip sheets were placed in a wet heat tester (Thermo-hygrostat manufactured by ESPEC CORPORATION), the samples were taken out after a lapse of 240 hours under the conditions of 80°C and 95% Rh, and the tensile strength of the strip sheets was measured with the tensile tester. The ratio of [tensile strength after wet heat test]/[tensile strength before wet heat test] (strength retention) was determined as an evaluation index of hydrolysis resistance.

### <Evaluation criteria>

A: Strength change rate: less than 15%
B: Strength change rate: 15% or more and less than 30%
C: Strength change rate: 30% or more and less than 45%
D: Strength change rate: 45% or more

In addition, the initial tensile strength of Example 1 was defined as 100, and the performance degradation rate of the tensile strength was determined according to the following criteria.

### <Evaluation criteria>

A: Degradation rate: less than 3%
B: Degradation rate: 3% or more and less than 5%
C: Degradation rate: 5% or more and less than 10%
D: Degradation rate: 10% or more

### (2) Hydrolysis resistance test (PBSA)

A melt-kneaded resin was subjected to flat plate pressing at a temperature equal to or higher than the softening point of the resin to produce a sheet having a thickness of about 300 µm, and strip sheets each having a width of 10 mm and a length of 70 mm were produced from the sheet. Then, the tensile strength of the produced strip sheets was measured with the tensile tester, and the tensile strength was taken as the initial strength. Further, the produced strip sheets were placed in a wet heat tester (Thermo-hygrostat manufactured by ESPEC CORPORATION), the samples were taken out after a lapse of 168 hours under the conditions of 70°C and 90% Rh, and the tensile strength of the strip sheets was measured with the tensile tester. The ratio of [tensile strength after wet heat test]/[tensile strength before wet heat test] (strength retention) was determined as an evaluation index of hydrolysis resistance.

### <Evaluation criteria>

A: Strength change rate: less than 15%
B: Strength change rate: 15% or more and less than 30%
C: Strength change rate: 30% or more and less than 45%
D: Strength change rate: 45% or more

In addition, the initial tensile strength of Example 19 was defined as 100, and the performance degradation rate of the tensile strength was determined according to the following criteria.

### <Evaluation criteria>

A: Degradation rate: less than 3%
B: Degradation rate: 3% or more and less than 5%
C: Degradation rate: 5% or more and less than 10%
D: Degradation rate: 10% or more

### (3) Hydrolysis resistance test (PLA)

A melt-kneaded resin was subjected to flat plate pressing at a temperature equal to or higher than the softening point of the resin to produce a sheet having a thickness of about 300 µm, and strip sheets each having a width of 10 mm and a length of 70 mm were produced from the sheet. Then, the tensile strength of the produced strip sheets was measured with the tensile tester, and the tensile strength was taken as the initial strength. Further, the produced strip sheets were placed in a wet heat tester (Thermo-hygrostat manufactured by ESPEC CORPORATION), the samples were taken out after a lapse of 75 hours under the conditions of 80°C and 95% Rh, and the tensile strength of the strip sheets was measured with the tensile tester. The ratio of [tensile strength after wet heat test]/[tensile strength before wet heat test] (strength retention) was determined as an evaluation index of hydrolysis resistance.

### <Evaluation criteria>

A: Strength change rate: less than 15%
B: Strength change rate: 15% or more and less than 30%
C: Strength change rate: 30% or more and less than 45%
D: Strength change rate: 45% or more

In addition, the initial tensile strength of Example 19 was defined as 100, and the performance degradation rate of the tensile strength was determined according to the following criteria.

### <Evaluation criteria>

A: Degradation rate: less than 3%
B: Degradation rate: 3% or more and less than 5%
C: Degradation rate: 5% or more and less than 10%
D: Degradation rate: 10% or more

### (4) Hydrolysis resistance test (PET)

A melt-kneaded resin was subjected to flat plate pressing at a temperature equal to or higher than the softening point of the resin to produce a sheet having a thickness of about 300 µm, and strip sheets each having a width of 10 mm and a length of 70 mm were produced from the sheet. Then, the tensile strength of the produced strip sheets was measured with the tensile tester, and the tensile strength was taken as the initial strength. Further, the produced strip sheets were placed in a PCT test chamber (Hast chamber manufactured by ESPEC CORPORATION), the samples were taken out after a lapse of 40 hours under the conditions of 121°C and 100% Rh, and the tensile strength of the strip sheets was measured with the tensile tester. The ratio of [tensile strength after PCT test]/[tensile strength before PCT test] (strength retention) was determined as an evaluation index of hydrolysis resistance.

### <Evaluation criteria>

A: Strength change rate: less than 15%
B: Strength change rate: 15% or more and less than 30%
C: Strength change rate: 30% or more and less than 45%
D: Strength change rate: 45% or more

In addition, the initial tensile strength of Example 23 was defined as 100, and the performance degradation rate of the tensile strength was determined according to the following criteria.

### <Evaluation criteria>

A: Degradation rate: less than 3%
B: Degradation rate: 3% or more and less than 5%
C: Degradation rate: 5% or more and less than 10%
D: Degradation rate: 10% or more

### (5) Foaming in sheet

A stretch-broken site of the sample after the tensile test was visually observed, and the average number of visible air bubbles was counted.

### <Evaluation criteria>

A: Average number of air bubbles: 0
B: Average number of air bubbles: 1 or more and 2 or less
C: Average number of air bubbles: 3 or more and 5 or less
D: Average number of air bubbles: 6 or more

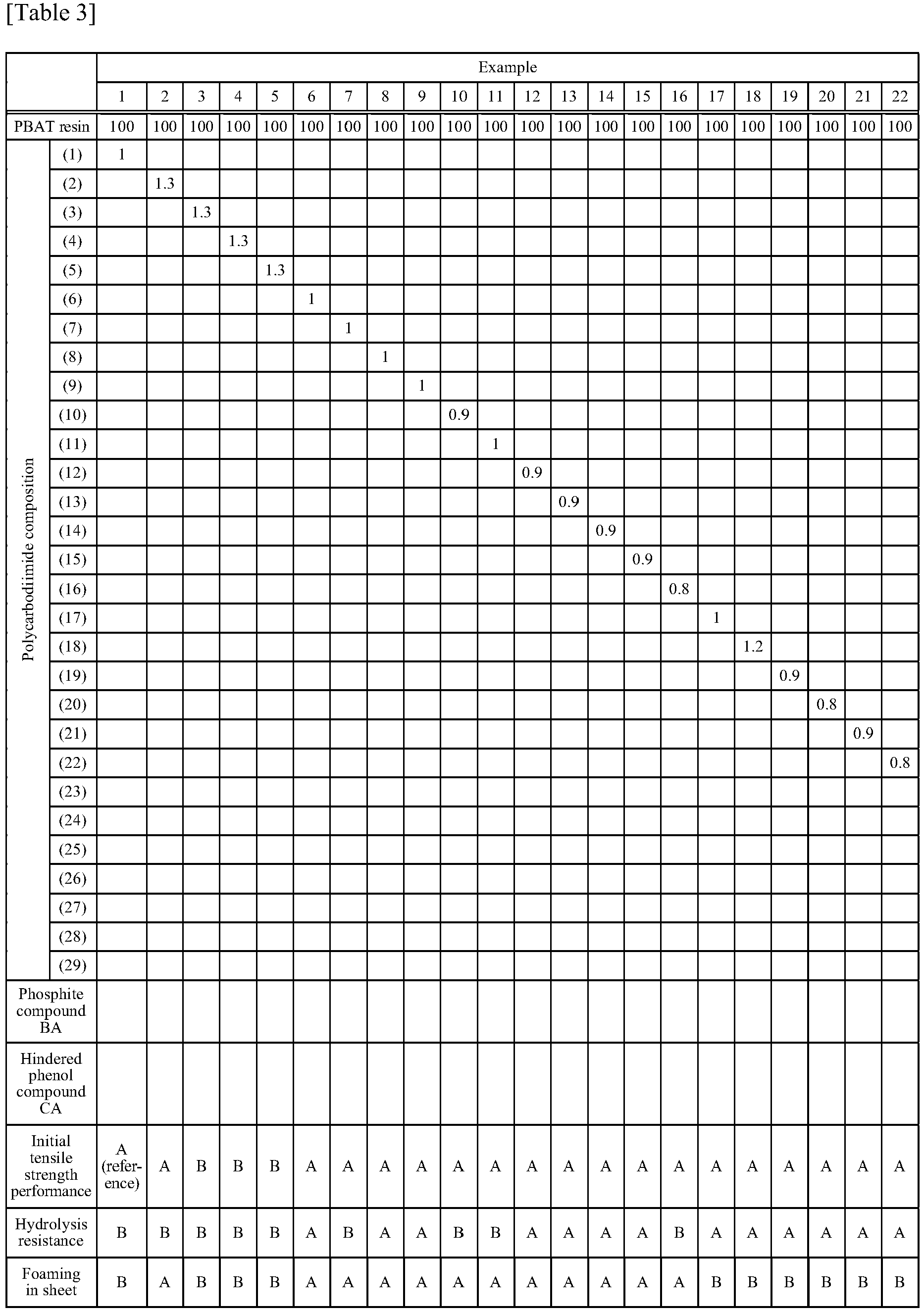

**[Table 4]**

| | | Comparative Example | | | | | | | |
|---|---|---|---|---|---|---|---|---|---|
| | | 1 | 2 | 3 | 4 | 5 | 6 | 7 | 8 |
| PBAT resin | | 100 | 100 | 100 | 100 | 100 | 100 | 100 | 100 |
| Polycarbodiimide composition | (1) | | | | | | | | |
| | (2) | | | | | | | | |
| | (3) | | | | | | | | |
| | (4) | | | | | | | | |
| | (5) | | | | | | | | |
| | (6) | | | | | | | | |
| | (7) | | | | | | | | |
| | (8) | | | | | | | | |
| | (9) | | | | | | | | |
| | (10) | | | | | | | | |
| | (11) | | | | | | | | |
| | (12) | | | | | | | | |
| | (13) | | | | | | | | |
| | (14) | | | | | | | | |
| | (15) | | | | | | | | |
| | (16) | | | | | | | | |
| | (17) | | | | | | | | |
| | (18) | | | | | | | | |
| | (19) | | | | | | | | |
| | (20) | | | | | | | | |
| | (21) | | | | | | | | |
| | (22) | | | | | | | | |
| | (23) | 1 | | | | | | | 1 |
| | (24) | | 1 | | | | | | |
| | (25) | | | 1 | | | | | |
| | (26) | | | | 1.1 | | | | |
| | (27) | | | | | 1.1 | | | |
| | (28) | | | | | | 1 | | |
| | (29) | | | | | | | 0.9 | |
| Phosphite compound BA | | | | | | | | | 0.04 |
| Hindered phenol compound CA | | | | | | | | | 0.04 |
| Initial tensile strength performance | | D | C | D | A | A | D | D | D |
| Hydrolysis resistance | | B | B | B | D | C | B | B | B |
| Foaming in sheet | | D | D | D | A | B | D | C | D |

**[Table 5]**

| | | Example | | Comparative Example | | Example | | Comparative Example | | Example | | Comparative Example | |
|---|---|---|---|---|---|---|---|---|---|---|---|---|---|
| | | 23 | 24 | 9 | 10 | 25 | 26 | 11 | 12 | 27 | 28 | 13 | 14 |
| PBSA resin | | 100 | 100 | 100 | 100 | | | | | | | | |
| PLA resin | | | | | | 100 | 100 | 100 | 100 | | | | |
| PET resin | | | | | | | | | | 100 | 100 | 100 | 100 |
| | (1) | 1 | | | | 1 | | | | 0.5 | | | |
| | (2) | | | | | | | | | | | | |
| | (3) | | | | | | | | | | | | |
| | (4) | | | | | | | | | | | | |
| | (5) | | | | | | | | | | | | |
| | (6) | | | | | | | | | | | | |
| | (7) | | | | | | | | | | | | |
| | (8) | | | | | | | | | | | | |
| | (9) | | | | | | | | | | | | |
| | (10) | | | | | | | | | | | | |
| | (11) | | 1 | | | | 1 | | | | 0.5 | | |
| | (12) | | | | | | | | | | | | |
| | (13) | | | | | | | | | | | | |
| | (14) | | | | | | | | | | | | |
| Polycarbodiimide composition | (15) | | | | | | | | | | | | |
| | (16) | | | | | | | | | | | | |
| | (17) | | | | | | | | | | | | |
| | (18) | | | | | | | | | | | | |
| | (19) | | | | | | | | | | | | |
| | (20) | | | | | | | | | | | | |
| | (21) | | | | | | | | | | | | |
| | (22) | | | | | | | | | | | | |
| | (23) | | | 1 | 1 | | | 1 | 1 | | | 0.5 | 0.5 |
| | (24) | | | | | | | | | | | | |
| | (25) | | | | | | | | | | | | |
| | (26) | | | | | | | | | | | | |
| | (27) | | | | | | | | | | | | |
| | (28) | | | | | | | | | | | | |
| | (29) | | | | | | | | | | | | |
| Phosphite compound BA | | | | | 0.04 | | | | 0.04 | | | | 0.02 |
| Hindered phenol compound CA | | | | | 0.04 | | | | 0.04 | | | | 0.02 |
| Initial tensile strength performance | | A (reference) | A | D | D | A (reference) | A | c | c | A (reference) | A | C | C |
| Hydrolysis resistance | | B | B | B | B | B | B | B | B | B | B | B | B |
| Foaming in sheet | | B | A | D | D | B | A | D | D | B | A | D | D |

As shown in Tables 3 to 5, it can be understood that the carbodiimide composition of the present invention is not only reduced in foaming and excellent in appearance of the sheet produced using the composition, but also excellent in hydrolysis resistance. In addition, it can be understood that the sheet also has satisfactory tensile strength before the wet heat test because the sheet is reduced in foaming.

## Claims

1. A carbodiimide composition comprising:
a carbodiimide compound (A);
a phosphite antioxidant (B); and
a hindered phenol antioxidant (C),
the carbodiimide composition comprising 1.5 parts by weight or more and 5 parts by weight or less of the phosphite antioxidant (B) per 100 parts by weight of the carbodiimide compound (A), and 1.5 parts by weight or more and 6 parts by weight or less of the hindered phenol antioxidant (C) per 100 parts by weight of the carbodiimide compound (A).

2. The carbodiimide composition according to claim 1, wherein a weight ratio of the phosphite antioxidant (B) to the hindered phenol antioxidant (C) is phosphite antioxidant (B) : hindered phenol antioxidant (C) = 1 : 1 or more.

3. The carbodiimide composition according to claim 2, wherein the weight ratio of the phosphite antioxidant (B) to the hindered phenol antioxidant (C) is phosphite antioxidant (B) : hindered phenol antioxidant (C) = 1 : 1 to 1 : 2.

4. The carbodiimide composition according to any one of claims 1 to 3, wherein the carbodiimide compound (A) is obtained using at least one compound selected from the group consisting of dicyclohexylmethane diisocyanate, diphenylmethane diisocyanate, tetramethylxylylene diisocyanate, xylylene diisocyanate, isophorone diisocyanate, hexamethylene diisocyanate, and tolylene diisocyanate.

5. The carbodiimide composition according to any one of claims 1 to 4, wherein the phosphite antioxidant (B) is a compound having a pentaerythritol structure.

6. The carbodiimide composition according to claim 1 or 2, wherein the hindered phenol antioxidant (C) is a compound having a pentaerythritol structure.

7. A resin composition comprising:
the carbodiimide composition according to any one of claims 1 to 6; and
a resin.

8. The resin composition according to claim 7, wherein the resin is a polyester resin.

9. A method for producing a resin composition, the method comprising the steps of
compounding 100 parts by weight of a carbodiimide compound (A), 1.5 parts by weight or more and 5 parts by weight or less of a phosphite antioxidant (B), and 1.5 parts by weight or more and 6 parts by weight or less of a hindered phenol antioxidant (C) to prepare a carbodiimide composition; and
mixing the obtained carbodiimide composition with a resin.

10. A molded article of the resin composition according to claim 7 or 8.

11. A cured product of the resin composition according to claim 7.

12. The molded article according to claim 10, which is a film or a sheet.

13. A foam control agent for resin molding comprising the carbodiimide composition according to any one of claims 1 to 6.

14. A method for controlling foaming during resin molding, the method comprising compounding the carbodiimide composition according to any one of claims 1 to 6 in a resin.
